# FASCICULE DE BREVET EUROPEEN

(11) **EP 2 912 106 B1**
(45) Date de publication et mention de la délivrance du brevet: **10.04.2024**
(21) Numéro de dépôt: 13801623.3
(22) Date de dépôt: 29.10.2013
(51) Int. Cl.: H01B 7/28, H01B 3/44, C08K 3/22

(54) **CÂBLE COMPRENANT UN REVÊTEMENT À BASE DE PTFE**
KABEL MIT EINER PTFE-BESCHICHTUNG
CABLE COMPRISING A PTFE COATING

(30) Priorité: 29.10.2012 FR 1260306
(43) Date de publication de la demande: 02.09.2015
(73) Titulaire: Produit Plastiques Performants Holding -3P Holding, 69571 Dardilly (FR)
(72) Inventeur: GARRAUD, Emmanuel, 69003 Lyon (FR)
(74) Mandataire: LLR
(86) Numéro de dépôt international: PCT/FR2013/052589
(87) Numéro de publication internationale: WO 2014/068246

(56) Documents cités:
- WO-A1-86/03329
- WO-A2-2012/001313
- GB-A- 763 761
- US-A- 3 176 065
- US-A- 3 217 083
- US-A1- 2005 199 414

## Description

La présente invention concerne un câble, notamment électrique, comprenant une âme enrobée d'un matériau revêtement de type polytétrafluoroéthylène (PTFE) ayant une charge élevée, ainsi que son procédé de fabrication.

Afin d'améliorer la performance de câbles, conducteurs ou non conducteurs, comprenant un revêtement, thermique, électrique où autre, on peut donner à ce revêtement qui les enrobe des propriétés leurs conférant par exemple une meilleure résistance à la chaleur ou une meilleure résistance mécanique.

Ainsi, il est connu que l'ajout d'une charge dans le revêtement, c'est-à-dire d'une substance solide, préférablement sous forme de particules ou de fibres de faibles dimensions, non miscibles et dispersées par un moyen mécanique dans une matrice (un matériau susceptible d'être utilisé comme revêtement, tels que des matériaux à base de PTFE), apporte au revêtement et au câble qu'il recouvre une amélioration de sa résistance thermique, mécanique et/ou électrique. Cette substance solide, ou charge, peut être constituée de matériaux très variés suivant l'effet à obtenir. Par exemple, il peut comprendre des fibres de verres, du carbone, des particules de céramiques etc. Le document GB763761 décrit notamment un câble coaxial comprenant deux couches semi-conductrices homogènes comprenant du PTFE et du carbone (15 à 60% en poids), ces couches étant séparées par une couche diélectrique à base de PTFE. Le document US3176065 décrit un câble comprenant deux couches homogènes de PTFE et une couche composée de PTFE (50 à 90% en poids) et d'alumine (de 10 à 50% en poids).

De plus dans le domaine des câbles électriques, un enrichissement en oxydes de métal, notamment en composés organométalliques permet une diminution de l'effet corona, effet indésirable observé notamment dans le domaine de l'aéronautique.

Toutefois, l'isolation de câbles par des matériaux en PTFE chargés, soulève de sérieuses difficultés par la présence d'une quantité importante de charges au sein du PTFE qui est très difficilement compatible avec des procédés d'extrusion du matériau.

GB 763 761 décrit un câble coaxial résistant aux fortes températures et miniaturisé qui comprend une succession de couches, comprenant des couches de PTFE non chargées ou chargées en carbone de 15 à 60%.

US 3 176 065 décrit un câble électrique résistant à l'abrasion qui comprend trois épaisseurs concentriques de matériau à base de PTFE, non chargées ou comprenant 10 à 50% de charges.

WO 86/03329 décrit un revêtement isolant souple résistant au feu à base de mica, de polymère thermostable et de fibres de verre.

US 3 217 083 vise à améliorer la résistance à l'abrasion et à la coupe de polymères fluorocarbonés, en utilisant un matériau contenant des fibres minérales orientées parallèlement à la surface de l'ensemble.

WO 2012/001313 concerne un matériau à base de PTFE chargé de 5 à 15% en poids d'oxyde de métal,
US 2005/199414 décrit un matériau pouvant contenir du PTFE et comportant éventuellement de 1 à 4% d'oxyde de titane et des traces de lubrifiant et/ou agent de mouillabilité.

Il existe donc un besoin en un câble enrobé par un revêtement à base de PTFE et comprenant une charge et présentant des propriétés améliorées en termes de résistance thermique, mécanique et/ou électrique et qui, par ailleurs, peut dans certaines conditions permettre de réduire efficacement l'effet corona.

A cet effet, l'invention a pour objet un câble comprenant une ou plusieurs âmes enrobée(s) par un revêtement comprenant :
- au moins une couche (a) d'un matériau à base de polytétrafluoroéthylène (PTFE), chargé de 5% à 80% en poids, ladite charge du matériau de la couche (a) comprenant un composé choisi parmi le groupe constitué par les oxydes de métal choisis parmi les oxydes de métaux alcalino-terreux, les oxydes de métaux de transition et les oxydes de métaux pauvres, les fibres de verre, le carbone, les céramiques et leur mélanges et
- au moins une couche (b) d'un matériau à base de PTFE chargé de moins de 8% en poids, ladite charge étant non nulle, la couche (b) étant positionnée à l'extérieur de la couche (a), et la charge étant exprimée en pourcentage par rapport au poids total du matériau à base de PTFE.

Lorsque le matériau à base de PTFE est chargé de moins de 8% en poids, cela signifie qu'une charge est présente et que la charge est nécessairement non nulle. Ainsi la proportion de charge appartient à l'intervalle ]0 ; 8[, 0 et 8 étant exclus. Avantageusement, cela signifie que la charge est de 1%, 2%, 3%, 4%, 5%, 6%, ou 7% en poids.

La charge est exprimée en pourcentages par rapport au poids total du matériau à base de PTFE constituant la couche en question.

L'invention propose donc de superposer au moins une couche (a) et au moins une couche (b), cette superposition de couches permettant d'obtenir un revêtement ayant une charge élevée, tout en évitant les problèmes de mise en oeuvre associés à la manipulation de telles compositions à base de PTFE, et notamment ceux relatifs à son extrusion et à sa mauvaise cohésion mécanique. Les effets avantageux sur la résistance thermique, mécanique et/ou électrique, comme par exemple pour réduire l'effet corona, sont d'autant plus importants que le revêtement présente une charge élevée. Cette succession de couches de charges différentes permet d'obtenir de façon particulièrement avantageuse un revêtement présentant une charge globale sensiblement équivalente à la somme des charges de chacune des couches. Aussi, de tels câbles, comprenant une succession de couches chargées, ont avantageusement une résistance thermique, mécanique et/ou électrique supérieure à ceux présentant une charge plus faible et/ou d'une teneur en charge limitée par leurs procédés de préparation.

Par « âme », on vise un brin ou une tige qui peut avoir la forme d'un cylindre. De préférence, l'âme est en métal, donc généralement conductrice, notamment d'électricité. Elle peut être un brin de cuivre ou d'aluminium de quelques millimètres de diamètre. Celui-ci peut être traité à l'argent pour améliorer la conductivité.

Un même câble peut comporter une ou plusieurs âmes. Celle(s)-ci peu(ven)t être entourée(s) d'un film polyimide, par exemple de type Kapton^{®} (Dupont). Un tel film peut être en contact direct avec l'âme du câble. Ainsi il n'est pas nécessaire pour la réalisation de l'invention qu'une couche d'un matériau à base de PTFE chargée soit en contact direct avec l'âme du câble. De la même manière, il n'est pas nécessaire que les couches (a) et (b) soient en contact direct, bien que cela soit un aspect préféré de l'invention.

Par « enrober », on entend recouvrir, avantageusement dans son ensemble, ou sur sa plus grande partie (par exemple plus de 95% de la surface à enrober), un élément. Pour un élément de forme généralement cylindrique, tel un câble, l'expression « dans son ensemble » désigne la surface cylindrique et non nécessairement les extrémités du câble.

De préférence, le revêtement dans son ensemble, et/ou au moins une des couches (a) et/ou (b) dont il est constitué, est isolant.

Par « isolant » on entend tout matériau, tels des matériaux à base de PTFE, qui limite les échanges d'énergie entre deux systèmes. Ce terme comprend les isolants électriques, les isolants thermiques, les isolants phoniques, les isolants mécaniques.

Le matériau à base de « polytétrafluoroéthylène », ou « PTFE », comprend, au moins 50% en poids de PTFE, modifié ou non, de préférence au moins 75% en poids de PTFE, modifié ou non, et de façon encore plus préféré consiste essentiellement en PTFE, modifié ou non, c'est-à-dire comprend au moins 90% de PFTE modifié ou non. Ainsi le matériau à base de PTFE peut être constitué de PTFE, modifié ou non. La charge n'est pas comprise dans cette définition d'un matériau à base de PTFE.

Le PTFE est un polymère comprenant une chaine carbonée comprenant des atomes de fluor de formule et consistant essentiellement de motifs (-CF2-CF2-)ₙ.

Le PTFE modifié est constitué de chaines de PTFE où des atomes de fluor sont remplacés par des atomes d'oxygène qui présentent des ramifications de chaines de PTFE. Ainsi le PTFE modifié peut comprendre des motifs de type :

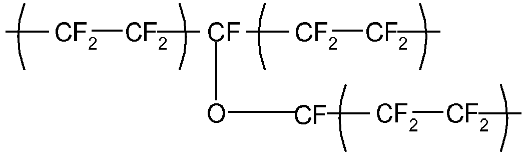

Avantageusement, le matériau de la couche externe (b) est en PTFE modifié, le PFTE modifié apportant ainsi une meilleure cohésion entre les différentes couches.

Le PTFE non modifié ou modifié peu adopter une densité typique, c'est-à-dire, une densité allant par exemple de 1,45 à 1,70 pour du PTFE cru et de 1,5 à 4 pour du PTFE cuit.

Le revêtement du câble peut donc comprendre une ou plusieurs couches (a) et une ou plusieurs couches (b). Ces couches peuvent s'organiser en strates ou en couches laminées dans l'épaisseur de l'isolant selon diverses manières.

Par exemple, une couche (c) d'un matériau à base de PTFE de charge nulle ou chargée de moins de à 8% en poids d'une charge peut être positionnée en dessous de la couche (a). Cette couche peut-être disposée directement au contact ou non, d'une ou de plusieurs des âmes du câble. Une telle couche additionnelle (c) peut donc être recouverte par une couche (a) disposée à l'extérieur de la couche (c). Une telle couche (c) peut être constituée d'un matériau identique ou non à celui de la couche (b).

Ainsi qu'il sera décrit ci-dessous en détails, la couche (b) et/ou (c) peut être obtenue par co-extrusion du matériau à base de PTFE ou bien par enroulement d'un ruban, préférablement cru, autour de la ou des âmes du câble.

La charge du matériau de la couche (a) comprend un composé choisi parmi le groupe constitué par les oxydes de métal, les fibres de verre, le carbone, les céramiques et un mélange de ceux-ci. Avantageusement, ledit composé comprend au moins un oxyde de métal.

Les oxydes métalliques sont choisis parmi le groupe constitué par les oxydes de métaux alcalino-terreux, de métaux de transition et de métaux pauvres. Avantageusement, l'oxyde de métal est choisi parmi le groupe constitué par le dioxyde de titane, l'alumine, l'oxyde de zinc, l'oxyde de cuivre, l'oxyde de magnésium et l'oxyde d'argent et un mélange de ceux-ci.

De préférence, la charge du matériau de la couche (a) comprend un seul oxyde de métal choisi parmi le groupe précité. La couche (a) et la couche (b) peuvent comprendre une charge de composés identiques ou différents, par exemple l'alumine pour la couche (a) et l'oxyde de zinc/titane pour la couche (b). Avantageusement, la charge du matériau de la couche (a) constitue de 15% à 60%, de préférence de 25% à 55%, encore préférentiellement 50% du poids du matériau à base de PTFE.

Avantageusement, la charge du matériau à base de PTFE de la couche (b) (ou, éventuellement (c)) est inférieure à 7%, de préférence inférieure à 5%, en poids du matériau à base de PTFE de la couche en question.

La couche (b), et/ou éventuellement (c), est avantageusement obtenue par extrusion lubrifiée. Le matériau à base de PTFE constituant de telle(s) couche(s) comprend donc avantageusement des pigments. On peut également y trouver des traces de lubrifiants et/ou d'agent de mouillabilité.

De préférence, la (ou les) couche(s) d'un matériau à base de PTFE de charge nulle telle que (c) ou chargée de moins de 8% en poids d'une charge telle que (b), comprend du PTFE modifié. De préférence, le PTFE peut être du PTFE modifié.

Avantageusement, l'invention concerne un câble tel que défini précédemment dans lequel le matériau à base de PTFE de la couche (b) et/ou de la couche (c) comprend du PTFE modifié.

Avantageusement, l'invention concerne un câble tel que défini précédemment dans lequel le matériau à base de PTFE de la couche (b) et/ou de la couche (c) comprend des pigments. Avantageusement, les couches (a), (b) et/ou éventuellement (c), sont homogènes. Par « homogène, on entend une couche continue, sans rupture tel que par exemple un espace, une interruption ou un trou de matière.

Lorsque le matériau en PTFE de la couche (b), ou éventuellement (c), est coextrudé la couche peut cependant ne pas être homogène.

Selon un aspect particulier de l'invention le câble peut comprendre un revêtement additionnel externe recouvrant les couches (a) et (b), par exemple un revêtement en élastomère.

L'invention a également pour objet un procédé de fabrication d'un câble ayant une ou plusieurs âmes enrobées par un revêtement, comprenant :
- une étape (i) d'enroulement d'un premier ruban, ayant une largeur et étant d'un matériau à base de PTFE cuit comprenant une charge de 5% à 80% en poids, autour de la ou des âmes pour obtenir un câble intermédiare, ladite charge du matériau de la couche (a) comprenant un composé choisi parmi le groupe constitué par les oxydes de métal choisis parmi les oxydes de métaux alcalino-terreux, les oxydes de métaux de transition et les oxydes de métaux pauvres, les fibres de verre, le carbone, les céramiques et leur mélanges;
- une étape subséquente (ii) d'enrobage dudit câble intermédiaire avec un matériau à base de PTFE cru comprenant une charge de moins de 8% en poids, ladite charge étant non nulle.

Les charges sont exprimées en pourcentages par rapport au poids total du ruban ou du matériau à base de PTFE utilisé. Les matériaux à base de PTFE ainsi que les charges utilisées, identiques ou différents, sont tels que décrit ci-dessus. Cependant les matériaux à base de PTFE qui peuvent être extrudés, en particulier ceux dont la charge est inférieure à 8% en poids, peuvent comprendre des agents tels que des lubrifiants ou des agents de mouillabilité. De tels agents sont en général évaporés durant les étapes ultérieures du procédé de fabrication. De préférence, le lubrifiant est alors un liquide à base d'hydrocarbures, tel qu'un hydrocarbure isoparaffinique, en particulier de l'Isopar^{™}, et l'agent de mouillabilité est un alcool gras, avantageusement le dodécan-1-ol. L'agent de mouillabilité permet une meilleure miscibilité du PTFE avec les charges et favorise ainsi l'obtention d'un mélange homogène. L'isopar^{™} (Exxon Mobil Chemical) est un mélange d'hydrocarbures isoparaffiniques synthétiques de grande pureté.

Ce procédé permet d'utiliser une combinaison de rubans cuits et crus qui confère des effets particulièrement avantageux sur la résistance thermique, mécanique et/ou électrique du câble ainsi obtenu.

Un matériau à base de PTFE cru ne subit pas de cycle de frittage lors de son procédé de fabrication (c'est-à-dire qu'il est exposé à une température inférieure à 350°C) et sa densité est généralement de 1,45 à 1,70.

Le ruban à base de PTFE cuit subit lors de son procédé de fabrication un cycle de frittage (c'est-à-dire qu'il est exposé à une température supérieure à 350°C pendant plusieurs minutes ou plusieurs heures), sa densité est alors généralement de 1,5 à 4, par exemple 2,16.

Avantageusement, une étape préliminaire est effectuée avant l'étape (i), ladite étape comprenant l'enrobage de l'âme, ou des âmes, avec un matériau à base de PTFE cru, comprenant une charge inférieure à 8% en poids.

Selon un aspect particulier de l'invention, l'étape d'enrobage (ii) est effectuée par enroulement d'un second ruban autour du câble intermédiaire.

Avantageusement, le procédé comprend en outre une étape subséquente (iii) de cuisson du câble, préférablement à une température supérieure à 350°C, plus particulièrement à une température maximum de 450°C. Cette étape permet avantageusement une meilleure soudabilité entre la bande déroulée cuite et le ruban cru, et de manière plus globale une meilleure cohésion d'ensemble du revêtement ainsi obtenu. Ces aspects sont encore plus avantageux lorsque le matériau utilisé dans l'étape (ii) est à base de PTFE modifié.

Avantageusement, le procédé comprend en outre une étape supplémentaire d'enrobage du câble par un revêtement additionnel, par exemple un revêtement en élastomère.

Avantageusement, le ou les ruban(s) a/ont une épaisseur de 20 à 250 µm, de préférence de 40 à 140µm, par exemple de 70 à 80 µm.

L'épaisseur des rubans est indépendante les unes des autres. Selon un aspect particulier de l'invention, le premier ruban est entouré autour de l'âme avec un recouvrement sur ou autour de lui-même. Ce recouvrement peut aller de 0,1% à 100%, plus préférentiellement peut être de 50%, 75%, 33% ou 25% ; ces pourcentages étant exprimés en largeur dudit ruban.

L'invention a également pour objet un kit pour la fabrication d'un câble tel que décrit ci-avant, comprenant :
- au moins une âme,
- au moins un ruban d'un matériau à base de PTFE cuit, chargé de 5% à 80% en poids d'une charge, et
- au moins un ruban d'un matériau à base de PTFE cru, de charge inférieure à 8% en poids.

Les charges étant exprimées en pourcentages par rapport au poids total du matériau à base de PTFE constitutif du ruban.

De préférence, le matériau à base de PTFE cuit et cru sont tels que décrit précédemment.

La présente invention concerne également l'utilisation d'un câble selon l'invention ou fabriqué selon un procédé, ou à partir d'un kit, selon l'invention, dans la fabrication d'un circuit électrique, particulièrement un circuit électrique destiné à l'aéronautique.

L'invention n'est pas limitée aux modes de réalisations présentées et d'autres modes de réalisation apparaîtront clairement à l'homme du métier. Par exemple un revêtement selon l'invention peut être appliqué à un élément ou dispositif autre qu'un câble. Elle sera mieux comprise à la lecture des exemples qui sont présents à titre indicatif et non limitatifs de l'invention.

### Exemple 1 : Fabrication d'un câble selon l'invention comportant deux couches à base de PTFE chargées.

Selon un mode de réalisation préféré, un câble selon l'invention est obtenu par l'enroulement de bandes de PTFE cuits et crus comprenant des charges. La composition de ces bandes est choisie de manière à obtenir des couches de charges différentes autour de l'âme du câble. Ces bandes sont enroulées autour de l'âme puis, le câble ainsi obtenu subi alors une étape de cuisson. Cette étape permet notamment de rendre les différentes couches solidaires.

Les rubans cuits sont disponibles dans le commerce sont obtenus selon des procédés bien connus. En bref la poudre de PTFE, et éventuellement d'autres composants constitutifs du ruban tels que des pigments, est mélangée à la charge choisie. Ce mélange est moulé sous pression. Cette étape de compaction peut typiquement être menée à une pression de 30 à 700 bars. L'ébauche issue de cette étape de moulage est alors cuite. L'étape de cuisson consiste en un cycle de chauffage pouvant aller de quelques heures à plusieurs jours à une température palier supérieure à 345°C, typiquement 375°C. Le bloc ainsi obtenu est transformé en films par la technique connue du déroulage.

Pour des rubans en PTFE cru, le procédé de fabrication est également connu. Il est par exemple décrit dans la demande de brevet publiée sous le numéro WO2012/001313. En résumé un mélange de PTFE, qui est généralement accompagné d'autres composants tels que des lubrifiants et des pigments, et de la charge est préformé par compaction (moulage à faible pression) puis ses préformes sont extrudées. L'extrudat ainsi obtenu est alors calendé afin d'obtenir un film de l'épaisseur désiré, typiquement 76 microns. Une étape de chauffage à basse température permet d'évaporer le lubrifiant qui est généralement présent car il permet à l'étape d'extrusion d'avoir lieu.

Différents rubans cuits chargés qui peuvent être utilisés dans le procédé selon l'invention pour l'enrubannage d'une ou de plusieurs âmes sont présentés dans le tableau suivant :

| | Epaisseur en µm | Charge (% d'oxyde de métal par rapport au poids total de PTFE) |
|---|---|---|
| 1 | 80 | 60% Bronze |
| 2 | 65 | 15% Alumine |
| 3 | 65 | 25% fibre de verre |
| 4 | 100 | 15% carbone |
| 5 | 80 | 25% Alumine |

Un exemple particulier a été réalisé en utilisant un ruban cuit qui a été obtenu selon le procédé suivant : Du PTFE standard chargé à 15% en alumine pouvant être obtenu chez la société 3M Dyneon est moulé sous la forme d'un cylindre creux de hauteur 200mm, avec un diamètre intérieur de 76µm et un diamètre extérieur de 197mm. Une pression de 65bars est appliquée pendant 5 minutes. Cette ébauche est ensuite passée en cuisson pendant 12h à 370°C. Une fois froide cette ébauche est alors déroulée et découpée sur une dérouleuse en un film d'épaisseur 80µm et de largeur 15mm. Ce ruban est enroulé manuellement autour d'une âme en aluminium de 6 mm de diamètre. L'enroulement se fait de manière hélicoïdale avec un décalage qui aboutit à un recouvrement du ruban sur lui-même de 50% de la largeur de ruban.

Un ruban de PTFE cru de 76µm d'épaisseur, sans charge, de largeur 12mm et de couleur bleu, vendu sous la marque 3P, référence ruban PTFE E76, L12 BLEU par la société 3P France (BP 79161, 95075 Cergy Pontoise cedex, France) est enroulé manuellement autour de l'âme et du ruban chargé à 15% d'alumine. L'enroulement se fait de manière hélicoïdale avec un décalage qui aboutit à un recouvrement du ruban sur lui-même de 50% de la largeur de ruban. Le câble ainsi enrubanné est cuit 7 minutes à 360°C. Le câble reste entier, il n'explose pas à la cuisson et les deux couches de ruban en PTFE chargé présentent une bonne adhérence entre elles.

Pour l'étape d'enrubannage, il est possible d'utiliser des machines d'enrubannage, telle que celles vendues par la société italienne WTM (www.wtmachinery.com).

La résistance thermique du câble obtenu dans l'exemple 1 a été étudiée. Pour cela, des câbles ont été maintenus durant 50 heures à une température de 360°C.L'état de leur structure globale a ensuite été observé à l'oeil nu, c'est-à-dire, la présence ou l'absence de détérioration de leur structure externe a été étudié. On observe que ce câble ne présente aucun trou visible à l'oeil nu. De plus les deux couches d'isolant (ruban PTFE 80µm chargé 15% Alumine et ruban 76µm bleu) ne se désolidarise ni l'une de l'autre ni de l'âme métallique.

## Revendications

1. Câble comprenant une ou plusieurs âmes enrobées par un revêtement comprenant :
- au moins une couche (a) d'un matériau à base de polytétrafluoroéthylène (PTFE) chargé de 5% à 80% en poids, ladite charge du matériau de la couche (a) comprenant un composé choisi parmi le groupe constitué par les oxydes de métal choisis parmi les oxydes de métaux alcalino-terreux, les oxydes de métaux de transition et les oxydes de métaux pauvres, les fibres de verre, le carbone, les céramiques et leurs mélanges et
- au moins une couche (b) d'un matériau à base de PTFE chargé de moins de 8% en poids, ladite charge étant non nulle,
la couche (b) étant positionnée à l'extérieur de la couche (a), et la charge étant exprimée en pourcentage par rapport au poids total du matériau à base de PTFE.

2. Câble selon la revendication 1, dans lequel la charge du matériau de la couche (a) constitue de 15% à 60%, de préférence de 25% à 55%, encore préférentiellement 50% du poids du matériau à base de PTFE.

3. Câble selon la revendication 1 ou 2, comprenant en outre une couche (c) d'un matériau à base de PTFE de charge nulle ou chargé de moins de 8% en poids, ladite couche (c) étant positionnée en dessous de la couche (a).

4. Câble selon l'une quelconque des revendications 1 à 3, dans lequel au moins la charge du matériau de la couche (a) comprend un composé choisi parmi les oxydes de métal choisis parmi les oxydes de métaux alcalino-terreux, les oxydes de métaux de transition et les oxydes de métaux pauvres.

5. Câble selon la revendication 4, dans lequel ledit composé du matériau de la couche (a) comprend au moins un oxyde de métal choisi parmi le groupe constitué par le dioxyde de titane, l'alumine, l'oxyde de zinc, l'oxyde de cuivre, l'oxyde de magnésium et l'oxyde d'argent et un mélange de ceux-ci.

6. Câble selon la revendication 5, dans lequel la charge du matériau à base de PTFE de la couche (a) comprend un seul oxyde de métal.

7. Câble selon l'une quelconque des revendications 1 à 6, dans lequel le matériau à base de PTFE de la couche (b) et/ou de la couche (c) comprend du PTFE modifié.

8. Câble selon l'une quelconque des revendications 1 à 7, dans lequel le matériau à base de PTFE de la couche (b) et/ou (c) comprend en outre, des pigments.

9. Câble selon l'une quelconque des revendications 1 à 8, dans lequel lesdites couches sont homogènes.

10. Câble selon l'une quelconque des revendications 1 à 9, comprenant en outre, un revêtement additionnel externe recouvrant les couches (a) et (b).

11. Procédé de fabrication d'un câble ayant une ou plusieurs âmes enrobées par un revêtement, comprenant :
- une étape (i) d'enroulement d'un premier ruban, ayant une largeur et étant d'un matériau à base de PTFE cuit comprenant une charge de 5% à 80% en poids, autour de la ou des âmes pour obtenir un câble intermédiaire, ladite charge comprenant un composé choisi parmi le groupe constitué par les oxydes de métal choisis parmi les oxydes de métaux alcalino-terreux, les oxydes de métaux de transition et les oxydes de métaux pauvres, les fibres de verre, le carbone, les céramiques et leurs mélanges ;
- une étape subséquente (ii) d'enrobage dudit câble intermédiaire avec un matériau à base de PTFE cru comprenant une charge de moins de 8% en poids, ladite charge étant non nulle,
les charges étant exprimées en pourcentage par rapport au poids total du ruban ou du matériau à base de PTFE.

12. Procédé de fabrication selon la revendication 11, dans lequel la charge du premier ruban constitue de 15% à 60%, de préférence de 25% à 55%, encore préférentiellement 50% du poids du matériau à base de PTFE.

13. Procédé de fabrication selon la revendication 11 ou 12, dans lequel une étape préliminaire est effectuée avant l'étape (i), ladite étape comprenant l'enrobage de l'âme avec un matériau à base de PTFE cru, comprenant une charge nulle ou inférieure à 8% en poids.

14. Procédé de fabrication selon l'une quelconque des revendications 11 à 13, dans lequel l'étape d'enrobage (ii) est effectuée par l'enroulement d'un second ruban autour du câble intermédiaire.

15. Procédé de fabrication selon l'une quelconque des revendications 11 à 14, comprenant en outre une étape subséquente (iii) de cuisson du câble.

16. Procédé de fabrication selon l'une quelconque des revendications 11 à 15, comprenant en outre une étape d'enrobage supplémentaire du câble pour constituer un revêtement additionnel.

17. Procédé selon l'une quelconque des revendications 11 à 16, dans lequel le matériau à base de PTFE du premier ruban est chargé d'un oxyde de métal choisi parmi le groupe constitué par le dioxyde de titane, l'alumine, l'oxyde de zinc, l'oxyde de cuivre, l'oxyde de magnésium et l'oxyde d'argent.

18. Procédé selon l'une quelconque des revendications 11 à 17, dans lequel le ou les ruban(s) utilisé(s) a (ont) une épaisseur de 20µm à 250µm, en particulier de 40µm à 140µm.

19. Kit pour la fabrication d'un câble selon l'une quelconque des revendications 1 à 10, comprenant :
- au moins une âme,
- au moins un ruban d'un matériau à base de PTFE cuit, chargé de 5% à 80% en poids, et
- au moins un ruban d'un matériau à base de PTFE cru, de charge inférieure à 8% en poids,
les charges étant exprimées en pourcentage par rapport au poids total du matériau à base de PTFE constitutif du ruban.

20. Utilisation d'un câble selon l'une quelconque des revendications 1 à 10 ou fabriqué selon le procédé décrit selon l'une quelconque des revendications 11 à 18 ou à partir du kit de la revendication 19 dans la fabrication d'un circuit électrique destiné à l'aéronautique.

## Patentansprüche

1. Kabel, umfassend eine oder mehrere Adern, die mit einer Beschichtung überzogen sind, umfassend:
- wenigstens eine Schicht (a) aus einem Material auf Basis von Polytetrafluorethylen (PTFE), das zu 5 Gewichts-% bis 80 Gewichts-% einen Füllstoff enthält, wobei der Füllstoff des Materials der Schicht (a) eine Verbindung enthält, die ausgewählt ist aus der Gruppe bestehend aus Metalloxiden, die ausgewählt sind aus Erdalkalimetalloxiden, Übergangsmetalloxiden und Nachübergangsmetalloxiden, Glasfasern, Kohlenstoff, Keramik und Gemischen davon, und
- wenigstens eine Schicht (b) aus einem Material auf Basis von PTFE, das einen Füllstoff zu weniger als 8 Gewichts-% enthält, wobei der Füllstoff ungleich null ist,
wobei die Schicht (b) außerhalb der Schicht (a) positioniert ist und wobei der Füllstoff als prozentualer Anteil bezogen auf das Gesamtgewicht des Materials auf Basis von PTFE ausgedrückt ist.

2. Kabel nach Anspruch 1, wobei der Füllstoff des Materials der Schicht (a) 15 % bis 60 %, bevorzugt 25 % bis 55 %, weiter bevorzugt 50 % des Gewichts des Materials auf Basis von PTFE bildet.

3. Kabel nach Anspruch 1 oder 2, ferner umfassend eine Schicht (c) aus einem Material auf Basis von PTFE, das keinen Füllstoff oder einen Füllstoff zu weniger als 8 Gewichts-% enthält, wobei die Schicht (c) unterhalb der Schicht (a) positioniert ist.

4. Kabel nach einem der Ansprüche 1 bis 3, wobei wenigstens der Füllstoff des Materials der Schicht (a) eine Verbindung enthält, die ausgewählt ist aus Metalloxiden, die ausgewählt sind aus Erdalkalimetalloxiden, Übergangsmetalloxiden und Nachübergangsmetalloxiden.

5. Kabel nach Anspruch 4, wobei die Verbindung des Materials der Schicht (a) wenigstens ein Metalloxid enthält, das ausgewählt ist aus der Gruppe bestehend aus Titandioxid, Aluminiumoxid, Zinkoxid, Kupferoxid, Magnesiumoxid und Silberoxid und Gemischen davon.

6. Kabel nach Anspruch 5, wobei der Füllstoff des Materials auf Basis von PTFE der Schicht (a) ein einziges Metalloxid enthält.

7. Kabel nach einem der Ansprüche 1 bis 6, wobei das Material auf Basis von PTFE der Schicht (b) und/oder der Schicht (c) modifiziertes PTFE enthält.

8. Kabel nach einem der Ansprüche 1 bis 7, wobei das Material auf Basis von PTFE der Schicht (b) und/oder (c) ferner Pigmente enthält.

9. Kabel nach einem der Ansprüche 1 bis 8, wobei die Schichten homogen sind.

10. Kabel nach einem der Ansprüche 1 bis 9, ferner umfassend eine zusätzliche äußere Beschichtung, die die Schichten (a) und (b) bedeckt.

11. Verfahren zur Herstellung eines Kabels mit einer oder mehreren Adern, die mit einer Beschichtung überzogen sind, umfassend:
- einen Schritt (i) zum Umwickeln der Ader(n) mit einem ersten Band mit einer Breite und aus einem Material auf Basis von gesintertem PTFE, das einen Füllstoff zu 5 Gewichts-% bis 80 Gewichts-% enthält, um ein Zwischenkabel zu erhalten, wobei der Füllstoff eine Verbindung enthält, die ausgewählt ist aus der Gruppe bestehend aus Metalloxiden, die ausgewählt sind aus Erdalkalimetalloxiden, Übergangsmetalloxiden und Nachübergangsmetalloxiden, Glasfasern, Kohlenstoff, Keramik und Gemischen davon;
- einen nachfolgenden Schritt (ii) des Überziehens des Zwischenkabels mit einem Material auf Basis von ungesintertem PTFE, das einen Füllstoff zu 8 Gewichts-% enthält, wobei der Füllstoff ungleich null ist,
wobei die Füllstoffe als prozentualer Anteil bezogen auf das Gesamtgewicht des Bandes oder des Materials auf Basis von PTFE ausgedrückt sind.

12. Herstellungsverfahren nach Anspruch 11, bei dem der Füllstoff des ersten Bandes 15 % bis 60 %, bevorzugt 25 % bis 55 %, weiter bevorzugt 50 % des Gewichts des Materials auf Basis von PTFE bildet.

13. Herstellungsverfahren nach Anspruch 11 oder 12, bei dem ein vorheriger Schritt vor Schritt (i) ausgeführt wird, wobei der Schritt das Überziehen der Ader mit einem Material auf Basis von ungesintertem PTFE, das keinen Füllstoff oder einen Füllstoff zu weniger als 8 Gewichts-% enthält, umfasst.

14. Herstellungsverfahren nach Anspruch 11 bis 13, bei dem der Schritt (ii) des Überziehens durch Umwickeln des Zwischenkabels mit einem zweiten Band ausgeführt wird.

15. Herstellungsverfahren nach einem der Ansprüche 11 bis 14, umfassend ferner einen nachfolgenden Schritt (iii) zum Sintern des Kabels.

16. Herstellungsverfahren nach einem der Ansprüche 11 bis 15, umfassend ferner einen Schritt zum weiteren Überziehen des Kabels, um eine zusätzliche Beschichtung zu bilden.

17. Verfahren nach einem der Ansprüche 11 bis 16, bei dem das Material auf Basis von PTFE des ersten Bandes mit einem Metalloxid gefüllt ist, das ausgewählt ist aus der Gruppe bestehend aus Titandioxid, Aluminiumoxid, Zinkoxid, Kupferoxid, Magnesiumoxid und Silberoxid.

18. Verfahren nach einem der Ansprüche 11 bis 17, bei dem das verwendete Band oder die verwendeten Bänder eine Dicke von 20 µm bis 250 um, insbesondere von 40 µm bis 140 µm hat bzw. haben.

19. Kit für die Herstellung eines Kabels nach einem der Ansprüche 1
bis 10, umfassend:
- wenigstens eine Ader,
- wenigstens ein Band aus einem Material auf Basis von gesintertem PTFE, das zu 5 Gewichts-% bis 80 Gewichts-% einen Füllstoff enthält, und
- wenigstens ein Band aus einem Material auf Basis von ungesintertem PTFE, das einen Füllstoff zu weniger als 8 Gewichts-% enthält,
wobei die Füllstoffe als prozentualer Anteil bezogen auf das Gesamtgewicht des Materials auf Basis von PTFE, aus dem das Band besteht, ausgedrückt sind.

20. Verwendung eines Kabels nach einem der Ansprüche 1 bis 10 oder
oder hergestellt nach dem Verfahren, das in einem der Ansprüche 11 bis 18 beschrieben ist,
oder ausgehend von dem Kit nach Anspruch 19 in der Herstellung einer elektrischen Schaltung für die Luft- und Raumfahrt.

## Claims

1. A cable having one or more cores coated in a coating comprising:
• at least one layer (a) of a material based on polytetrafluoroethylene (PTFE) with 5% to 80% by weight filler, said filler of the material of layer (a) comprising a compound selected from the group constituted by metal oxides selected from oxides of alkaline earth metals, oxides of transition metals and oxides of poor metals, glass fibers, carbon, ceramics, and mixtures thereof; and
• at least one layer (b) of a material based on PTFE with less than 8% by weight filler, the quantity of filler being not zero;
the layer (b) being positioned outside the layer (a), and the filler contents being expressed as a percentage relative to the total weight of the PTFE-based material.

2. A cable according to claim 1, wherein the filler content of the material of the layer (a) constitutes 15% to 60%, preferably 25% to 55%, more preferably 50% by weight of the PTFE-based material.

3. A cable according to claim 1 or claim 2, further comprising a layer (c) of PTFE-based material having no filler or less than 8% by weight filler, said layer (c) being positioned under the layer (a).

4. A cable according to any one of claims 1 to 3, wherein at least the filler of the material of the layer (a) comprises a compound selected from metal oxides selected from oxides of alkaline earth metals, oxides of transition metals and oxides of poor metals.

5. A cable according to claim 4, wherein said compound of said material of layer (a) comprises at least one metal oxide selected from the group constituted by titanium dioxide, alumina, zinc oxide, copper oxide, magnesium oxide and silver oxide, and mixtures thereof.

6. A cable according to claim 5, wherein the filler of the PTFE-based material of the layer (a) comprises a single metal oxide.

7. A cable according to any one of claims 1 to 6, wherein the PTFE-based material of the layer (b) and/or of the layer (c) comprises modified PTFE.

8. A cable according to any one of claims 1 to 7, wherein the PTFE-based material of the layer (b) and/or of the layer (c) further comprises pigments.

9. A cable according to any one of claims 1 to 8, wherein said layers are homogeneous.

10. A cable according to any one of claims 1 to 9, further including an additional outer coating covering the layers (a) and (b).

11. A fabrication method for fabricating a cable having one or more cores coated in a coating, the method comprising:
• a step (i) of winding a first tape having a width and being made of a cured PTFE-based material including 5% to 80% by weight of filler, around the core(s) in order to obtain an intermediate cable, said filler comprising a compound selected from the group constituted by metal oxides selected from oxides of alkaline earth metals, oxides of transition metals and oxides of poor metals, glass fibers, carbon, ceramics, and mixtures thereof; and
• a subsequent step (ii) of coating said intermediate cable with a material based on raw PTFE including no filler or less than 8% by weight filler, the quantity of filler being not zero;
the filler contents being expressed as a percentage relative to the total weight of the tape or the PTFE-based material.

12. A fabrication method according to claim 11, wherein the filler of the first tape constitutes 15% to 60%, preferably 25% to 55%, more preferably 50% by weight of the PTFE-based material.

13. A fabrication method according to claim 11 or claim 12, wherein a preliminary step is performed prior to step (i), said step comprising coating the core with a raw PTFE-based material including no filler or less than 8% by weight filler.

14. A fabrication method according to any one of claims 11 to 13, wherein the coating step (ii) is performed by winding a second tape around the intermediate cable.

15. A fabrication method according to any one of claims 11 to 14, further including a subsequent step (iii) of curing the cable.

16. A fabrication method according to any one of claims 11 to 15, further including an additional step of coating the cable in order to constitute an additional coating.

17. A method according to any one of claims 11 to 16, wherein the PTFE-based material of the first tape is filled with a metal oxide selected from the group constituted by titanium dioxide, alumina, zinc oxide, copper oxide, magnesium oxide, and silver oxide.

18. A method according to any one of claims 11 to 17, wherein the tape(s) used present(s) a thickness lying in the range 20 um to 250 µm, in particular in the range 40 um to 140 µm.

19. A kit for fabricating a cable according to any one of claims 1 to 10, the kit comprising:
· at least one core;
· at least one tape of cured PTFE-based material having 5% to 80% by weight of filler; and
· at least one tape of raw PTFE-based material having less than 8% by weight filler;
the filler contents being expressed as percentages relative to the total weight of the PTFE-based material constituting the tape.

20. The use of a cable according to any one of claims 1 to 10 or fabricated by the method described in any one of claims 11 to 18, or from the kit of claim 19or claim 21, in the fabrication of an electrical circuit for aviation purposes.
